Europäisches Patentamt

European Patent Office

Office européen des brevets

(19)

(11) **EP 0 497 706 B1**

(12) **FASCICULE DE BREVET EUROPEEN**

(45) Date de publication et mention
de la délivrance du brevet:
**13.11.1996 Bulletin 1996/46**

(51) Int Cl.6: **C08B 30/12**, C08L 3/02,
C08K 5/09

(21) Numéro de dépôt: **92400257.9**

(22) Date de dépôt: **31.01.1992**

(54) **Compositions thermoformables, leur procédé de préparation et leur utilisation pour l'obtention d'articles thermoformés**

Durch Wärme formbare Zusammensetzungen, Verfahren zu ihrer Herstellung und ihre Anwendung zur Herstellung von thermogeformten Gegenständen

Thermoformable compositions, process for preparing them and their use for obtaining thermoformed articles

(84) Etats contractants désignés:
**AT BE CH DE DK ES FR GB GR IT LI LU MC NL PT SE**

(30) Priorité: **31.01.1991 FR 9101120**

(43) Date de publication de la demande:
**05.08.1992 Bulletin 1992/32**

(73) Titulaire: **Roquette Frères**
**F-62136 Lestrem (FR)**

(72) Inventeurs:
• **Fleche, Guy**
**F-59190 Hazebrouck (FR)**
• **Gosset, Serge**
**F-62136 Lestrem (FR)**
• **Lambla, Morand**
**F-67800 Hoenheim (FR)**

(74) Mandataire: **Ahner, Francis et al**
**CABINET REGIMBEAU**
**26, avenue Kléber**
**75116 Paris (FR)**

(56) Documents cités:
EP-A- 0 118 240        EP-A- 0 282 451
FR-A- 2 292 005

• WORLD PATENTS INDEX Derwent Publications Ltd., London, GB; AN 76-12150X ; & JP-A-50 101 442

**EP 0 497 706 B1**

## Description

La présente invention a pour objet une nouvelle composition thermoformable. Elle vise également un nouveau procédé de préparation d'une composition thermoformable ainsi que l'utilisation de ladite composition en vue de l'obtention d'articles thermoformés.

La préparation d'articles de formes déterminées et en particulier les techniques de thermoformage, c'est-à-dire de réalisation de formes par action de la température, font largement appel à des matériaux synthétiques tels que le polyéthylène, le polypropylène, le polystyrène ou le polychlorure de vinyle. Ces matériaux synthétiques sont, à titre d'exemples, utilisés pour la préparation d'articles de toutes formes (feuilles, tubes, joncs ou formes plus élaborées) et destinations, tels que les emballages (sacs poubelle ou conteneurs), les paillis de culture, les bouteilles, certains articles de consommation (verres, lots, draps), etc.

Cependant, ces matériaux synthétiques commencent à susciter de sérieux problèmes d'environnement, étant donné leur lente disparition dans les différents systèmes écologiques où leur dégradation ne survient souvent qu'après plusieurs dizaines d'années.

Des opérations faisant appel au recyclage et à l'incinération permettent déjà aujourd'hui de limiter les effets néfastes des rejets constitués par les matières plastiques synthétiques. Le développement et l'optimisation de ces opérations conduira à une baisse notable de la pollution. De même, il a été proposé des solutions pour accélérer la dégradation des polymères de synthèse par photooxydation. Des additifs à base d'acides gras insaturés associés à des métaux lourds par exemple, conduisent, sous l'action de la lumière, à la dégradation de la macromolécule synthétique selon un mécanisme radicalaire. Les petites chaînes ainsi obtenues favorisent la dispersion du matériau et son élimination dans le milieu naturel. Cependant, les photométabolites peuvent occasionnellement poser des problèmes de pollution.

D'autres solutions reposent sur le principe de la biodégradation d'éléments biodégradables introduits dans un polymère synthétique aux fins de former, ce qu'il est convenu d'appeler, un plastique dégradable. Aussi, plusieurs méthodes vont caractériser cette démarche qui, dans une large mesure, fait appel à l'amidon en tant qu'élément biodégradable. Ce polymère a l'avantage d'être une source de matière première renouvelable annuellement et biodégradable sous l'action des enzymes sécrétées par les microorganismes tels que bactéries ou moisissures. Globalement, ces méthodes se ventilent en trois groupes selon la technique de mise en oeuvre de l'amidon.

Une première technologie, par exemple décrite dans le brevet FR 2252385, consiste à introduire dans une matière polyoléfinique, constituée notamment par le polyéthylène, des granules d'amidon à un taux compris généralement entre 5 et 30 %, plus particulièrement de l'ordre de 15 %. L'amidon y joue un rôle de charge uniformément dispersée dans la matière polyéthylénique. Aucune interaction n'intervient entre l'amidon très hydrophile et le polymère très hydrophobe. L'amidon est ajouté soit directement dans le polyéthylène, soit plus couramment par le biais d'un mélange maître pouvant renfermer jusque 50 % d'amidon. L'amidon est en général déshydraté (humidité inférieure à 1 %) et une variante du procédé, décrite dans le brevet GB 1487050, envisage l'enrobage préalable du granule par des groupes silylés hydrophobes afin d'augmenter la compatibilité amidon-polyéthylène. On ajoute parfois à l'amidon un système inducteur de photodégradation permettant alors de combiner bio et photodégradations.

L'amidon apporte des propriétés fonctionnelles particulières telles qu'anti-blocage, meilleure imprimabilité, antistatisme... dans les articles moulés ou filmés, avec cependant, une réduction des propriétés mécaniques dans le cas des films.

Une deuxième technologie, par exemple décrite dans les brevets EP 32802 et EP 132299, consiste, en vue de l'obtention de films flexibles, à introduire une phase continue d'amidon dans un polymère de synthèse afin de constituer une structure que l'on pourrait qualifier de composite. Le granule d'amidon désintégré par gélatinisation ou extrusion est, comme décrit dans le brevet EP 32802, dispersé dans un polymère synthétique de nature hydrophile tel que le copolymère d'éthylène-acide acrylique (EAA), partiellement neutralisé, en présence éventuellement d'un plastifiant tel que le glycérol ou l'éthylène glycol. Cette technique autorise une introduction de 50 à 60 % d'amidon. Le composite amidon-polymère synthétique ainsi obtenu est présenté comme permettant de fabriquer des films extrudés dont la résistance mécanique est améliorée et montrant une meilleure biodégradabilité. Dans ce système, l'amidon est gélatinisé en présence d'eau et l'humidité du mélange doit être abaissée dans la plage 2-10 % avant les opérations de moulage ou d'extrusion.

Compte tenu des quantités maximales d'eau ainsi requises, il est décrit comme généralement nécessaire d'effectuer au moins deux passages des compositions sur extrudeuse ce qui rend cette technologie complexe et coûteuse en énergie et apparemment difficilement extra-polable à une production continue d'articles contenant de fortes proportions d'amidon.

En outre, selon les indications du brevet EP 32802 susmentionné, la présence de 30 à 40 % en poids d'amidon au sein du composite impose la mise en oeuvre de polyéthylène (10 à 40 %) en vue de renforcer les propriétés mécaniques des films obtenus.

Les deux technologies susdécrites font, en toute généralité appel à des mélanges d'amidon et de résines synthé-

2

tiques.

La troisième technologie, décrite en particulier dans les brevets EP 118 240 et EP 326 517, vise quant à elle l'obtention de matière thermoformable à base essentiellement d'amidon. Pour atteindre ce but, l'amidon doit se présenter sous la forme de granules destructurés par fusion. Sa mise en oeuvre peut alors se réaliser sur les équipements conventionnels de transformation des matières plastiques. Il y a lieu généralement d'ajouter, au cours de ce traitement, un système plastifiant à l'amidon.

Les produits finis obtenus, constitués essentiellement d'amidon, sont par nature biodégradables.

La fabrication d'une matière thermoformable à forte teneur en amidon telle que décrite dans le brevet EP 118240 impose des gammes de température et de pression plutôt élevées (températures supérieures à 120°C et pression de plusieurs centaines de bars) pour satisfaire aux conditions de transformation en machine d'injection.

Les articles, en particulier les capsules, obtenus après moulage et refroidissement sont cependant rigides, très fragiles et hygroscopiques, et leurs propriétés mécaniques varient avec leur teneur en eau.

Il est d'ailleurs souvent proposé, pour diminuer cette sensibilité à l'eau ou pour modifier les propriétés finales du matériau amylacé, de l'associer à un ou plusieurs additifs choisis, en particulier, parmi :

- les agents hydrophiles et par exemple, la gélatine, les protéines, les polysaccharides hydrosolubles,
- les agents de charge minéraux et par exemple les oxydes de magnésium, d'aluminium ou de titane,
- les agents plastifiants et par exemple le polyéthylène glycol.

La demande de brevet FR-A-2 292 005 décrit pour sa part une composition thermoformable hydrosoluble et comestible contenant un composé amylacé et un sel de métal alcalin d'une matière protéique. Sa résistance à l'eau peut être améliorée par traitement par irradiation aux ultraviolets ou par un agent de coagulation des protéines, comme par exemple des sels minéraux, des acides organiques comestibles de bas poids moléculaires ou les sels neutres et acides desdits acides.

Il a également été décrit, par exemple dans le brevet EP 327 505, d'associer un amidon destructuré à des polymères thermoplastiques de synthèse insolubles dans l'eau.

En vue d'améliorer les conditions de mise en oeuvre du matériau amylacé, il a été préconisé, comme décrit dans le brevet EP 282 451, de destructurer l'amidon à température élevée (de préférence 160 à 185°C) en présence d'un catalyseur de dépolymérisation de l'amidon, ledit catalyseur, par exemple l'acide chlorhydrique, devant permettre de réduire la masse moléculaire moyenne de l'amidon d'un facteur de 2 à 5 000.

A ce jour, comme décrit plus haut, l'essentiel des tentatives qui portaient sur l'exploitation macromoléculaire des matières amylacées en vue de la préparation d'une matière thermoformable, s'est orienté vers une action combinée de la température et de la pression.

Il est à noter que si le procédé décrit dans le brevet EP 326 517 susmentionné évoque la possibilité de destructurer l'amidon par extrusion à des pressions relativement faibles (inférieures à 50 bars) par rapport à celles envisagées en technique d'injection, il n'en demeure pas moins que ledit procédé impose de travailler à des températures élevées, se situant entre 130 et 190°C.

Or, indépendamment du coût énergétique associé à ces conditions opératoires, celles-ci ne permettent pas de préserver les propriétés intrinsèques de l'amidon dont, en particulier, la masse moléculaire moyenne ne peut être dans tous les cas maintenue.

Il résulte de ce qui précède qu'il existait un besoin de trouver un moyen d'obtention d'une matière thermoformable qui soit simple, peu coûteux, notamment en énergie, qui n'engendre pas de réel problème de dégradabilité et qui soit applicable à la fabrication d'une large gamme d'articles thermoformés.

Et le mérite de la Société Demanderesse est d'avoir trouvé, à l'occasion de travaux menés en collaboration avec l'EAHP (Ecole d'Application des Hauts Polymères de Strasbourg), que, de façon surprenante et inattendue, un tel moyen pouvait être constitué par l'association, en présence ou non de tiers constituants, d'au moins un composé amylacé et d'au moins un sel d'acide hydroxycarboxylique.

Plus précisément, la présente invention a pour objet une composition thermoformable caractérisée par le fait qu'elle contient au moins un composé amylacé et au moins un sel d'acide hydroxycarboxylique.

Un premier aspect particulièrement avantageux de l'invention réside dans le fait que le composé amylacé contenu au sein de ladite composition thermoformable peut être mis en oeuvre dans des conditions de température et/ou de pression significativement moins sévères que celles généralement requises dans la pratique industrielle et donc plus favorables au maintien de ses propriétés intrinsèques.

En suite de quoi, le composé amylacé contenu au sein de la composition thermoformable objet de l'invention peut avantageusement se présenter dans un état que l'on peut qualifier de "fondu partiel".

Cet état partiellement fondu se différencie de la gélatinisation de l'amidon et de sa fusion totale. La gélatinisation de l'amidon, qui est obtenue grâce à l'utilisation d'une forte proportion d'eau, conduit à l'obtention de dispersions colloïdales. En revanche, la fusion totale de l'amidon est essentiellement obtenue par traitement thermique et conduit à la disparition complète des grains d'amidon. L'état fondu partiel correspond à un état intermédiaire dans lequel on observe une destruction au moins partielle des liaisons hydrogène intermoléculaires avec établissement de nouvelles liaisons hydrogène entre l'eau et les groupes hydroxyles de l'amidon. Dans cet état intermédiaire on observe généralement la persistance d'une certaine proportion de granules d'amidon.

Un second aspect particulièrement avantageux de l'invention réside dans la très grande applicabilité des compositions thermoformables conformes à l'invention lesquelles permettent d'obtenir, y compris pour un dispositif de thermoformage et des paramètres opératoires donnés, des articles formés présentant une très large gamme de propriétés mécaniques, notamment en termes de viscoélasticité.

La Société Demanderesse a d'ailleurs trouvé qu'un moyen efficace et original d'estimation desdites propriétés mécaniques pouvait consister en l'utilisation de la technique dite d'Analyse Mécanique Dynamique, laquelle sera détaillée ci-après au niveau des exemples.

Il convient simplement de souligner à cet endroit de la description que la technique d'Analyse Mécanique Dynamique permet de déterminer la variation du facteur de perte tgδ d'un matériau donné dans une gamme de températures et en particulier de connaître la température à laquelle ledit matériau, lequel est testé sous la forme d'un échantillon de dimensions données, présente un facteur de perte tgδ maximum. La température ainsi déterminée permet d'approcher de la température de transition vitreuse dudit matériau.

Et il est remarquable de souligner que les compositions conformes à l'invention permettent, comme décrit de façon plus détaillée ci-après au niveau des exemples, d'obtenir des articles thermoformés présentant un facteur de perte tgδ maximum se situant dans une très large gamme de températures, notamment entre 0 et 160°C c'est-à-dire dans la gamme englobant les températures de transition vitreuse de la plupart des polymères de synthèse traditionnels.

De façon avantageuse, la composition thermoformable objet de l'invention, laquelle contient au moins un composé amylacé et au moins un sel d'acide hydroxycarboxylique, se caractérise en outre par le fait qu'elle est apte à fournir un article thermoformé présentant un facteur de perte tgδ dont la valeur maximum se situe à une température au plus égale à 150°C. notamment entre 0 et 130°C environ.

Par le terme composé amylacé, au sens de la présente invention, on entend tout type d'amidon, quelle qu'en soit l'origine, natif ou modifié et ce, par voie chimique et/ou physique. Lorsqu'on fait appel à un amidon natif pour la constitution des compositions conformes à l'invention, celui-ci est notamment choisi dans le groupe comprenant les amidons natifs, naturels ou hybrides, provenant du maïs, du maïs à haute teneur en amylopectine (amidon waxy), du maïs à haute teneur en amylose, du blé, du riz, du pois, de la pomme de terre, du manioc, les coupes ou fractions qui peuvent en être faites ou obtenues et les mélanges quelconques d'au moins deux quelconques des produits susmentionnés.

Lorsque l'on fait appel à un amidon modifié chimiquement pour la constitution des compositions conformes à l'invention, celui-ci est notamment choisi dans le groupe comprenant les amidons modifiés par au moins l'une ou l'autre des techniques connues d'éthérification, d'estérification, de réticulation, d'oxydation, de traitement alcalin, d'hydrolyse acide et/ou enzymatique.

On peut, à titre d'exemple, faire appel avantageusement à des amidons éthérifiés par des groupements ioniques, en particulier cationiques, ou non ioniques, ces derniers pouvant consister en des amidons hydroxyalkylés tels que des amidons hydroxypropylés ou hydroxyéthylés.

De même que l'on fera par exemple appel avantageusement à des amidons à haute teneur en amylose, natifs ou modifiés, notamment de tels amidons cationisés.

On peut également utiliser, dans le cadre de l'invention, des amidons préalablement modifiés physiquement, par exemple par traitement aux micro-ondes ou ultra-sons, par cuisson-extrusion, par gélatinisation sur tambour ou par compactage, lesdits amidons se présentant avantageusement dans un état de modification n'allant pas au-delà de l'état de fondu partiel décrit ci-avant.

En outre, les amidons modifiés chimiquement tels que ceux décrits ci-avant peuvent, simultanément, antérieurement ou postérieurement au processus de modification chimique, avoir été soumis à un tel traitement de modification physique.

Dans le cadre de la présente invention, on entend par "acide hydroxycarboxylique" tout acide comportant au moins une fonction hydroxyle et au moins une fonction carboxylique.

Cette définition s'applique notamment à des acides de type :

- monohydroxy/monocarboxylique tels que les acides lactique, glycolique ou hydroxybutyrique,
- monohydroxy/polycarboxylique tels que les acides citrique, isocitrique, malique ou tartronique,
- polyhydroxy/monocarboxylique tels que les acides gluconique, maltobionique, lactobionique, glucuronique, glycérique, ribonique, xylonique, galactonique ou mévalonique.
- polyhydroxy/polycarboxylique tels que les acides tartrique, mésoxalique ou glucarique,
- les mélanges quelconques d'au moins deux quelconques desdits acides tels que, par exemple, les hydrolysats d'amidon oxydés pouvant contenir, entre autres et dans des proportions variables, de l'acide gluconique et de l'acide maltobionique, et notamment les sirops de glucose oxydés (SGO).

Le sel d'acide hydroxycarboxylique auquel il est fait appel dans la composition objet de l'invention, peut en particulier être choisi dans le groupe comprenant les sels d'acides monohydroxy/monocarboxyliques et les sels d'acides polyhydroxy/monocarboxyliques, notamment les sels de l'acide lactique, de l'acide gluconique, de l'acide maltobionique, de l'acide lactobionique ou de l'acide glycérique, ainsi que les mélanges quelconques d'au moins deux quelconques desdits sels.

Les sels utilisés sont préférentiellement ceux associant l'acide hydroxycarboxylique à un métal alcalin ou alcalino-terreux, en particulier à un métal choisi dans le groupe comprenant le sodium, le potassium, le calcium et le magnésium. En vue d'améliorer l'aptitude au vieillissement et/ou la résistance à l'eau d'articles thermoformés obtenus à partir des compositions selon l'invention, celles-ci pourront notamment contenir un sel de potassium d'un acide hydroxycarboxylique.

De façon tout à fait avantageuse, la composition conforme à l'invention contient, en tant que sel d'acide hydroxycarboxylique, au moins un sel de l'acide lactique, en particulier un sel de métal alcalin ou alcalino-terreux de l'acide lactique et notamment du lactate de sodium ou du lactate de potassium.

Il convient de noter que le sel d'acide hydroxycarboxylique pourra, bien que cela ne soit pas préféré, être généré "in situ" c'est-à-dire par mise en présence, au sein de la composition conforme à l'invention, d'un acide hydroxycarboxylique tel que l'acide lactique et d'une base appropriée (soude, potasse, chaux, amine) en prenant soin d'éviter, à l'encontre des enseignements du brevet EP-A-0 282 451 susmentionné, toute catalyse acide apte à dépolymériser substantiellement le composé amylacé.

De préférence, la composition conforme à l'invention présente un rapport pondéral entre composé(s) amylacé(s) d'une part et sel(s) d'acide hydroxycarboxylique d'autre part compris entre environ 99/1 et 25/75 et plus préférentiellement entre 98/2 et 60/40, étant précisé qu'il est tenu compte, en ce qui concerne le ou les sels d'acide hydroxycarboxylique, du poids sec mis en oeuvre.

Outre la présence caractéristique d'au moins un composé amylacé et d'au moins un sel d'acide hydroxycarboxylique, notamment d'un sel d'acide lactique, la composition conforme à l'invention peut contenir un ou plusieurs adjuvants, de toutes natures et fonctions (agents d'extension ou de charge, résines synthétiques, plastifiants, lubrifiants, agents colorants ou autres), par exemple un ou plusieurs des adjuvants décrits plus particulièrement au niveau du brevet EP 118 240 susmentionné

La composition conforme à l'invention peut notamment contenir et ce, sans que cette liste ne soit limitative :

- un ou plusieurs adjuvants choisis dans le groupe comprenant l'urée et ses dérivés, les sucres hydrogénés tels que le sorbitol, le mannitol, le maltitol, le lactitol et les produits pouvant en contenir tels que les hydrolysats d'amidon hydrogénés, les glycols, les polyéthylène et polypropylène glycols, le glycérol et ses dérivés, les tensio-actifs anioniques ainsi que les mélanges quelconques d'au moins deux quelconques desdits adjuvants.

En pratique, les adjuvants ci-dessus peuvent représenter globalement de 0,5 % en poids environ jusqu'à 30 % en poids environ de la composition objet de l'invention, étant entendu qu'un adjuvant tel que l'urée sera mis en oeuvre préférentiellement à des taux généralement au plus égaux à 10 % en poids environ.

- une ou plusieurs résines synthétiques telles que le polyéthylène, le polypropylène, le polychlorure de vinyle, les polyamides, les copolymères éthylène/acétate de vinyle et leurs dérivés (EVA) et (EVOH), les copolymères éthylène/acide acrylique et leurs dérivés (EAA). Ces résines peuvent être présentes dans les compositions selon l'invention à des teneurs élevées pouvant atteindre jusqu'à environ 70 % en poids de la composition totale. En pareil cas, l'association du composé amylacé et du sel d'acide hydroxycarboxylique apparaît davantage comme étant un adjuvant de compositions thermoplastiques.

Cependant, lorsqu'une bonne biodégradabilité est recherchée pour les articles thermoformés de consommation courante, lesdites résines synthétiques seront, en cas de mise en oeuvre, introduites préférentiellement à raison d'au plus 20 % en poids environ de composition selon l'invention, en particulier entre 0,5 et 10 % en poids.

- une ou plusieurs charges minérales telles que les oxydes de titane, silice ou aluminium, le talc, le carbonate de calcium et leurs mélanges, et ce généralement à raison d'au plus 20 % en poids environ de composition selon l'invention, et notamment entre 0,01 et 5 % en poids.
- un ou plusieurs agents hydrofugeants tels que ceux de nature organosilicique et par exemple les siliconates de métaux alcalins ou alcalino-terreux, les huiles silicones, les résines silicones et leurs mélanges.
- un ou plusieurs agents de coloration, anti-flamme, de lubrification, anti-oxydants, fongicides.

Dans le cadre de l'invention, on peut notamment faire appel, comme décrit ci-après au niveau des exemples, à des adjuvants tels que le sorbitol, l'urée, le glycérol, leurs dérivés, ou encore à des mélanges quelconques de ceux-ci.

La teneur en eau de la composition objet de l'invention, n'est pas un paramètre prépondérant en vue de son application à la fourniture d'articles thermoformés. En particulier, il n'y a aucune nécessité d'ajuster cette teneur en eau, notamment à des taux peu élevés comme décrit dans certaines publications précitées de l'art antérieur.

On s'assurera simplement que ladite composition présente une humidité telle que son alimentation au niveau des dispositifs ultérieurs de transformation peut être assurée convenablement.

En pratique, cette humidité est au plus égale à 40 % environ et se situe notamment entre environ 5 et environ 30 %.

En suite de quoi, on dispose désormais d'un nouveau procédé de préparation d'une composition thermoformable caractérisé par le fait que l'on soumet un composé amylacé, en présence ou non d'un sel d'acide hydroxycarboxylique et/ou d'un ou de plusieurs adjuvants de toutes natures, à un traitement apte à l'amener dans un état partiellement fondu et que, éventuellement, l'on met ultérieurement le composé amylacé partiellement fondu ainsi obtenu en présence d'au moins un sel d'acide hydroxycarboxylique et/ou d'un ou de plusieurs adjuvants de toutes natures. Le traitement auquel on soumet le composé amylacé peut être effectué sur tous types de dispositifs conventionnels, en particulier ceux classiquement utilisés piur l'application, à des produits de toutes natures, de microondes ou d'ultrasons et/ou utilisés pour la transformation, en continu ou discontinu, des matières plastiques et élastomères et notamment des dispositifs du type extrudeurs monovis ou bivis, malaxeurs ou presses à injecter.

A titre d'exemple, on peut citer des dispositifs de construction modulaire tels que les co-malaxeurs type MDK/E 46 ou MDK/E 70 commercialisés par la société BUSS.

De préférence, le traitement auquel on soumet le composé amylacé est effectué dans des conditions telles que ledit composé amylacé ne subit pas de dépolymérisation substantielle.

Selon le procédé conforme à l'invention, le traitement auquel on soumet le composé amylacé peut par exemple être, soit un traitement thermique, combinant ou non l'action d'ultra-sons et/ou de la pression à celle de la température, en particulier un traitement de cuisson-extrusion ou de gélatinisation sur tambour, soit un traitement aux micro-ondes.

En outre, et c'est là un aspect particulièrement avantageux de la présente invention, des compositions amylacées thermoformables peuvent désormais être préparées dans des conditions opératoires, notamment de température et/ou de pression, significativement moins sévères que celles généralement requises dans la pratique industrielle et donc plus favorables au maintien des propriétés intrinsèques des composés amylacés utilisés.

De préférence, le traitement thermique, en particulier de cuisson-extrusion, auquel on peut soumettre le composé amylacé est effectué à une température au plus égale à 130°C environ, se situant notamment entre 50 et 120°C environ.

En pratique, on peut, à titre d'exemple, utiliser à cette fin les co-malaxeurs BUSS susmentionnés en appliquant :

- des températures se situant entre environ 80 et environ 120°C, et notamment entre 80 et 100°C,
- des pressions inférieures à 20 bars environ, en particulier de l'ordre de 2 à 5 bars.

Selon une première variante du procédé de préparation de composition thermoformable, conforme à l'invention, le traitement auquel on soumet le composé amylacé en vue de l'amener dans un état partiellement fondu est effectué en absence de sel d'acide hydroxycarboxylique, le composé amylacé partiellement fondu obtenu étant ultérieurement mis en présence, par tout moyen approprié, d'au moins un sel d'acide hydroxycarboxylique, ce dernier pouvant, bien que cela ne soit pas préféré, être généré in situ au sein de la composition résultante.

Selon une autre variante dudit procédé, le traitement auquel on soumet le composé amylacé en vue de l'amener dans un état partiellement fondu est effectué en présence d'au moins un sel d'acide hydroxycarboxylique, ledit sel pouvant également être généré in situ au sein de la composition résultante.

Il convient de souligner que dans le cadre du procédé de préparation de composition thermoformable, conforme à l'invention, la mise en oeuvre et la mise en présence entre eux du composé amylacé, du sel d'acide hydroxycarboxylique et des adjuvants éventuels peuvent s'effectuer selon une multitude de variantes, notamment en ce qui concerne la forme d'introduction (forme liquide, visqueuse ou solide, introduction par mélange intime ou par pulvérisation, etc.) et le moment d'introduction (introduction dès le départ ou fractionnée dans le temps) de chacun de ces constituants au sein de la composition.

Il convient également de souligner que dans le cadre du procédé objet de l'invention, la mise en présence l'un de l'autre, du composé amylacé et du sel d'acide hydroxycarboxylique peut être effectué par simple relance dans des conditions de température que l'on peut qualifier de basses, à savoir au plus égales à 50°C, y compris proches ou inférieurs aux températures ambiantes (20-30°C).

Cette possibilité peut être envisagée, à titre d'exemples, dans le cas où ledit mélange est soumis à un traitement aux micro-ondes et/ou dans le cas où le composé amylacé contenu dans ledit mélange a préalablement été traité aux micro-ondes.

Bien que cela ne soit pas particulièrement recommandé dans le cadre du procédé de la présente invention, il peut être également envisagé que le composé amylacé contenu dans ledit mélange ait préalablement été destructuré par une méthode telle que décrite dans les brevets EP 118 240, EP 282 451, EP 326 517 ou EP 327 505 susmentionnés.

En suite de quoi les compositions amylacées thermoformables obtenues conformément à l'invention, lesquelles constituent des produits industriels nouveaux, peuvent être appliquées à la préparation d'articles de toutes formes (joncs, tubes, feuilles, films, granulés, capsules, ou formes plus élaborées), et de toutes destinations et ce, par mise en oeuvre de toute technique disponible de thermoformage et notamment par extrusion, co-extrusion, moulage par injection, moulage par soufflage ou par calandrage.

Comme il a déjà été exposé, la très grande applicabilité desdites compositions thermoformables se manifeste, entre autres, par la possibilité d'obtenir, y compris pour un dispositif de thermoformage et des paramètres opératoires donnés, des articles formés présentant une très large gamme de propriétés mécaniques, notamment en termes de viscoélasticité.

L'estimation desdites propriétés mécaniques peut notamment consister en l'utilisation de la technique dite d'Analyse Mécanique Dynamique comme décrit dans les exemples qui suivent et qui font état de certains modes de réalisation avantageuse de la présente invention.

## EXEMPLES

## EXEMPLE 1 - PROTOCOLE GENERAL

## A - EXEMPLE DE MODE DE REALISATION DE COMPOSITIONS SELON L'INVENTION.

La mise en présence, conformément à l'invention d'au moins un composé amylacé et d'au moins un sel d'acide hydroxycarboxylique ainsi que d'éventuels adjuvants se fait, à température ambiante, dans un homogénéiseur de type PAPPENMEIER refroidi par circulation d'eau.

Dans le cas de la mise en oeuvre d'un sel d'acide hydroxycarboxylique se présentant sous forme liquide (lactate de sodium par exemple), ledit sel est ajouté progressivement au mélange, lequel est homogénéisé pendant une durée de l'ordre de quelques minutes.

## B - APPLICATION DES COMPOSITIONS A LA PREPARATION D'ARTICLES THERMOFORMES.

La composition obtenue comme décrit précédemment est à température ambiante par exemple, introduite dans la trémie d'alimentation d'une machine de transformation de type co-malaxeur BUSS PR 46.

Cet appareillage, permettant l'obtention d'une composition thermoformable puis sa mise en forme, est constitué d'un malaxeur suivi d'une extrudeuse de reprise en tête d'équerre et d'une filière équipée d'un couteau, lequel permet la préparation de granulés à par tir de l'article thermoformé obtenu, celui-ci se présentant sous la forme d'un jonc. On notera en outre que le malaxeur et/ou l'extrudeuse comporte(nt) un puits de dévolatilisation. Les modalités générales de traitement sont les suivantes :

- la température de consigne est de 100°C et, en raison du refroidissement par eau de la zone d'alimentation, un gradient s'installe, allant de 80 (zone à proximité de la zone d'alimentation) à 95°C environ (zone de la filière);
- la vitesse de rotation de la vis est ajustée de manière à obtenir le meilleur mélange possible; elle est située entre 20 et 60 tr/mn environ;
- la pression est maintenue à une valeur inférieure à 5 bars environ.

Les articles thermoformés obtenus dans le cas présent (joncs, granulés) peuvent être utilisés en l'état. Cependant, d'une manière générale, on les destinera plus volontiers à l'alimentation subséquente d'autres dispositifs de transformation, continue ou discontinue, tels que presses à injecter, extrudeurs mono ou double vis, calandres, en vue de la fabrication d'objets finis tels que tubes, profilés, films, plaques, pièces injectées.

## C - CARACTERISATION PAR ANALYSE MECANIQUE DYNAMIQUE DES PROPRIETES MECANIQUES DES ARTICLES OBTENUS.

L'Analyse Mécanique Dynamique est une méthode particulièrement sensible à tout changement dans la structure et les interactions macromoléculaires qui induit une modification des propriétés macroscopiques du matériau. Il s'agit d'une technique très fine pour déterminer la variation des modules élastique et de perte d'un échantillon en fonction de la température. La même technique donne également accès à la température de transition vitreuse (Tg) du matériau. La connaissance de cette donnée ainsi que des propriétés d'amortissement mesurées à l'état solide peuvent être employées pour prévoir la température d'utilisation, les propriétés au choc ainsi que la rigidité du produit fini.

Le principe de l'Analyse Mécanique Dynamique repose sur l'application à un échantillon d'une déformation linéaire (ou de torsion) sinusoïdale de fréquence donnée et de faible amplitude superposée à une contrainte constante de valeur connue. La réponse du matériau est une contrainte de même pulsation mais déphasée d'un angle $\delta$. Le com-

portement du matériau est décrit par une grandeur complexe appelée module d'élasticité complexe tel que :

$$E^* = E' + E''$$

où

E' est le module élastique et E'' le module visqueux. L'angle de déphasage δ est tel que tgδ , également appelé facteur de perte, est égal à E''/E'.

Un matériau purement élastique tel que l'acier fera apparaître un angle de déphasage nul, soit une composante imaginaire nulle. Un matériau purement visqueux tel que l'eau fera apparaître une composante réelle nulle. L'angle de déphasage sera alors de 90°. Pour les polymères synthétiques, un matériau viscoélastique pourra couvrir toutes les valeurs comprises entre 0 et 90°.

Une amélioration particulière a été apportée à la technique par la fabrication d'une cellule de mesure de géométrie spéciale permettant d'isoler le matériau testé de l'air en utilisant une huile silicone de très faible viscosité; on limite ainsi les problèmes liés à l'eau présent dans l'échantillon.

Dans le cas présent, les essais ont été menés sur un appareil de type R.S.A. II (Rheometrics Solid Analyser). La géométrie de mesure est la tension/compression cylindrique et on effectue des balayages en température à fréquence de sollicitation constante. La fréquence choisie est dans notre cas ω = 10 rad/s et le domaine de température couvert va de l'ambiante à 150°C environ. On procède à une mesure tous les 2°C, tout en laissant à l'échantillon un temps de 2,5 min. afin d'assurer son équilibre thermique avec le four.

Les matériaux testés sont issus des joncs thermoformés obtenus comme décrit précédemment, lesquels sont prélevés et coupés en échantillons dont les dimensions sont les suivantes :

- diamètre maximum :         15 mm,
- diamètre préféré :       8 à 14 mm,
- épaisseur maximum :         25 mm,
- épaisseur préférée :         3 à 5 mm.

## EXEMPLE 2 - CARACTERISATION D'UN ARTICLE THERMOFORME OBTENU A PARTIR D'UNE COMPOSITION NON CONFORME A L'INVENTION

On réalise, par simple mélange, une composition amylacée à partir de 80 % en poids de fécule de pomme de terre native (teneur en eau : 20 % environ) auxquels on ajoute 20 % en poids d'eau.

Ladite composition (ci-après désignée composition témoin 1) est introduite, directement après sa préparation, dans la trémie d'un co-malaxeur BUSS PR 46 puis traitée conformément à l'EXEMPLE 1B ci-dessus en vue de l'obtention d'une composition thermoformable puis d'un article thermoformé de type jonc.

Un échantillon dudit article est préparé puis caractérisé par Analyse Mécanique Dynamique conformément à l'EXEMPLE 1C ci-dessus.

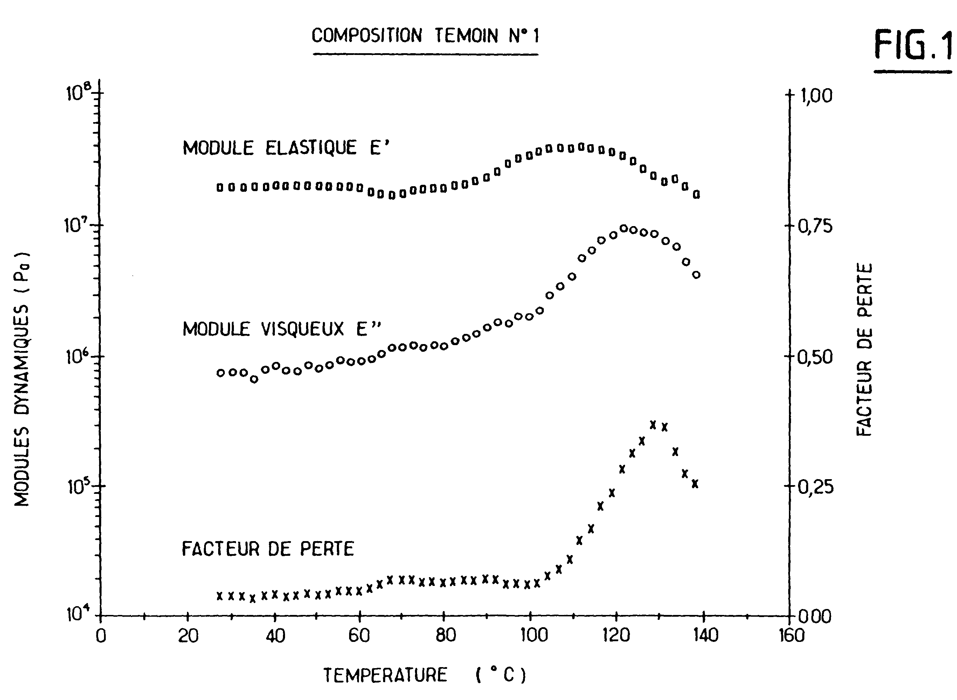

La figure 1 représente, pour cet échantillon, l'évolution du facteur de perte tgδ en fonction de la température. On constate que la courbe ainsi obtenue présente un maximum de tgδ se situant à haute température, de l'ordre de 130°C environ et ce, après un large domaine de températures où le facteur de perte est quasiment nul, le module élastique E' étant très supérieur au module visqueux E". On a donc affaire à un matériau rigide et cassant à température ambiante et dont la température de transition vitreuse doit se situer vers 130°C environ.

## EXEMPLE 3 - CARACTERISATION D'ARTICLES THERMOFORMES A PARTIR DE COMPOSITIONS CONFORMES A L'INVENTION

On prépare diverses compositions, référencées 2 à 16, contenant au moins un composé amylacé et au moins un sel d'acide hydroxycarboxylique, en l'occurence du lactate de sodium.

Le tableau 1 ci-après reprend pour chacune desdites compositions la nature et le taux d'introduction (% en poids) de chacun des composants mis en oeuvre (composé amylacé, sel d'acide hydroxycarboxylique, adjuvant(s) éventuel(s).

TABLEAU 1

| N° compo-sition | Composé amylacé | | Sel d'acide hydroxycarboxy. | | . Adjuvant(s) éventuel(s) | |
|---|---|---|---|---|---|---|
| | nature | % en poids | nature | % | nature | % |
| 2 | fécule de pomme de terre | 90 | lactate de Na | 10 | - | - |
| 3 | idem | 80 | idem | 20 | - | - |
| 4 | idem | 70 | idem | 20 | urée | 10 |
| 5 | idem | 70 | idem | 5 | urée sorbitol | 5 20 |
| 6 | amidon de maïs cireux WAXILYS[R] | 70 | idem | 5 | urée sorbitol | 5 20 |
| 7 | amidon de maïs riche en amylose EURYLON[R]7 | 70 | idem | 5 | urée sorbitol | 5 20 |
| 8 | fécule de pomme de terre carboxyméthy-lée/réticulée GLYCOLYS[R]D | 70 | idem | 5 | urée sorbitol | 5 20 |
| 9 | amidon de maïs cireux éthérifié (hydroxy-éthylé) | 70 | idem | 5 | urée sorbitol | 5 20 |

Le lactate de sodium est utilisé en solution aqueuse à 80 % de M.S. (Matière Sèche)

l'urée est utilisée sous la forme de poudre anhydre

le sorbitol est utilisé sous forme de poudre

EP 0 497 706 B1

## TABLEAU I - suite

| N° composition | Composé amylacé | | Sel d'acide hydroxycarboxy. | | Adjuvant(s) éventuel(s) | |
|---|---|---|---|---|---|---|
| | nature | % en poids | nature | % | nature | % |
| 10 | fécule de pomme de terre | 70 | Gluconate de Na | 5 | Urée<br>Sorbitol | 5<br>20 |
| 11 | idem | 70 | SGO | 5 | Urée<br>Sorbitol | 5<br>20 |
| 12 | idem | 70 | Tartrate di-Na | 5 | Urée<br>Sorbitol | 5<br>20 |
| 13 | idem | 70 | Citrate tri-Na | 5 | urée<br>sorbitol | 5<br>20 |
| 14 | fécule de pomme de terre catio-nique Hi-Cat 180 | 70 | Lactate de sodium | 5 | urée<br>sorbitol | 5<br>20 |
| 15 | amidon de maïs cationique à haute teneur en amylose | 70 | idem | 5 | urée<br>sorbitol | 5<br>20 |
| 16 | amidon de maïs riche en amylose EURYLON 7 | 60 | idem | 10 | Glycérol<br>Sorbitol ®<br>EVOH Clarène R20 | 5<br>15<br>10 |

EP 0 497 706 B1

Ces compositions sont introduites, directement après leur préparation, dans la trémie d'un co-malaxeur BUSS PR 46 puis traitées conformément à l'EXEMPLE 1B ci-dessus en vue de l'obtention de compositions thermoformables puis d'articles thermoformés de type jonc.

Un échantillon de chacun des articles obtenus est préparé puis caractérisé par Analyse Mécanique Dynamique conformément à l'EXEMPLE 1C ci-dessus.

Le Tableau 2 ci-dessous reprend, pour chacune des compositions selon l'invention 2 à 16, ainsi que pour la composition témoin 1 testée dans le cadre de l'EXEMPLE 2, la température pour laquelle la valeur du facteur de perte tgδ, mesurée par Analyse Mécanique Dynamique, est maximum.

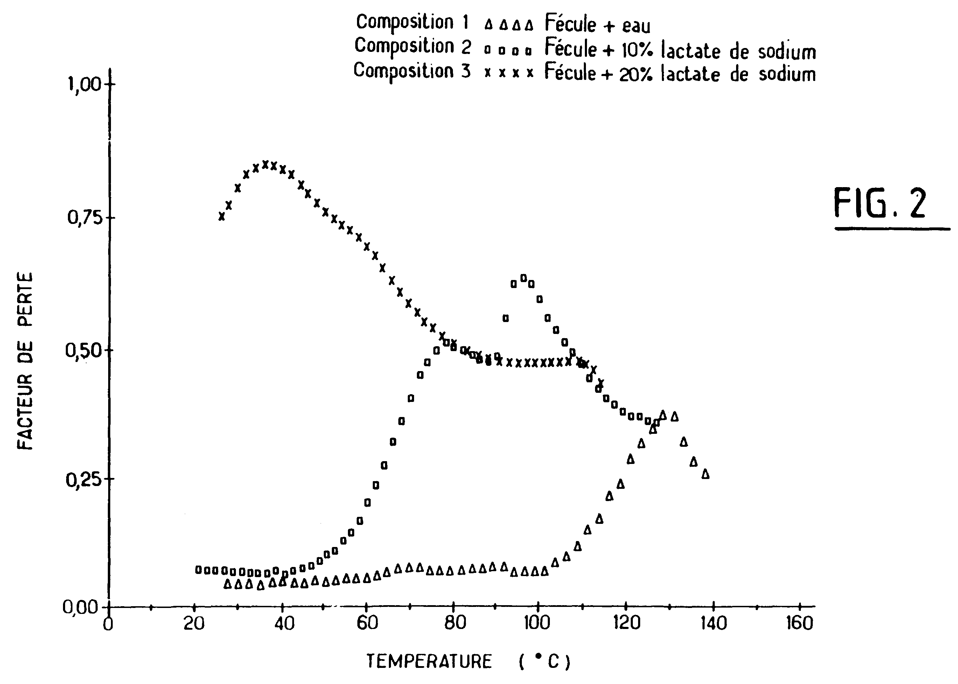

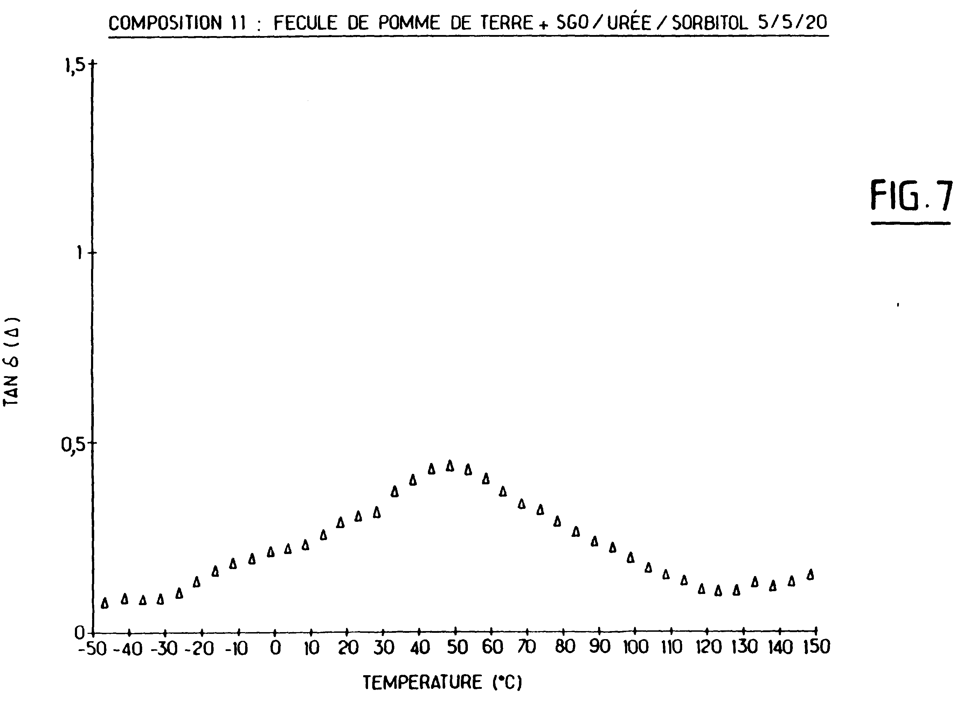

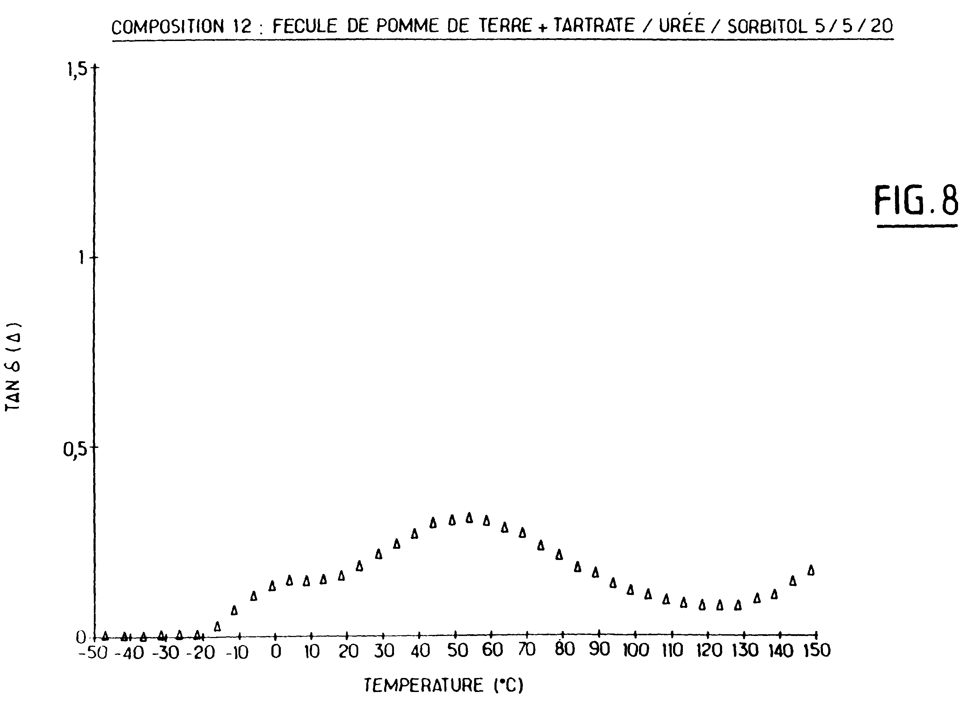

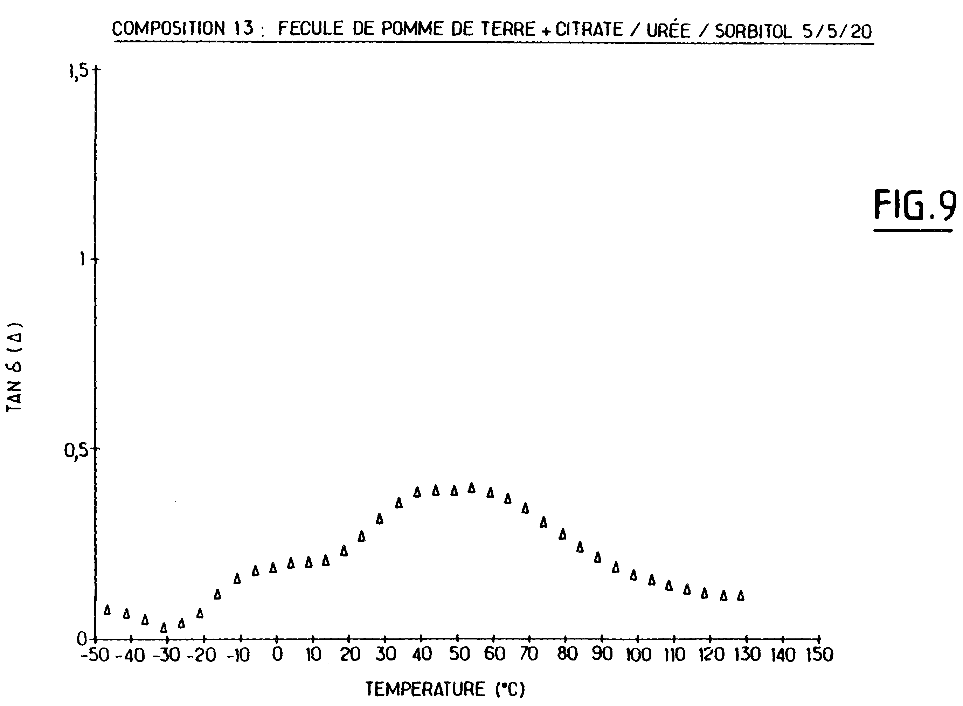

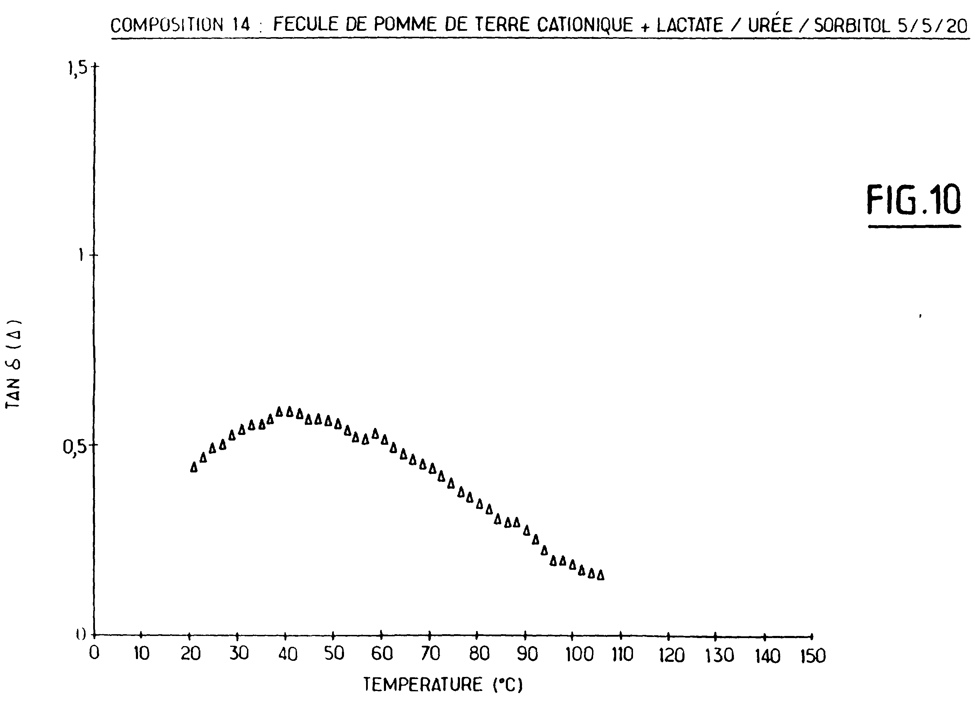

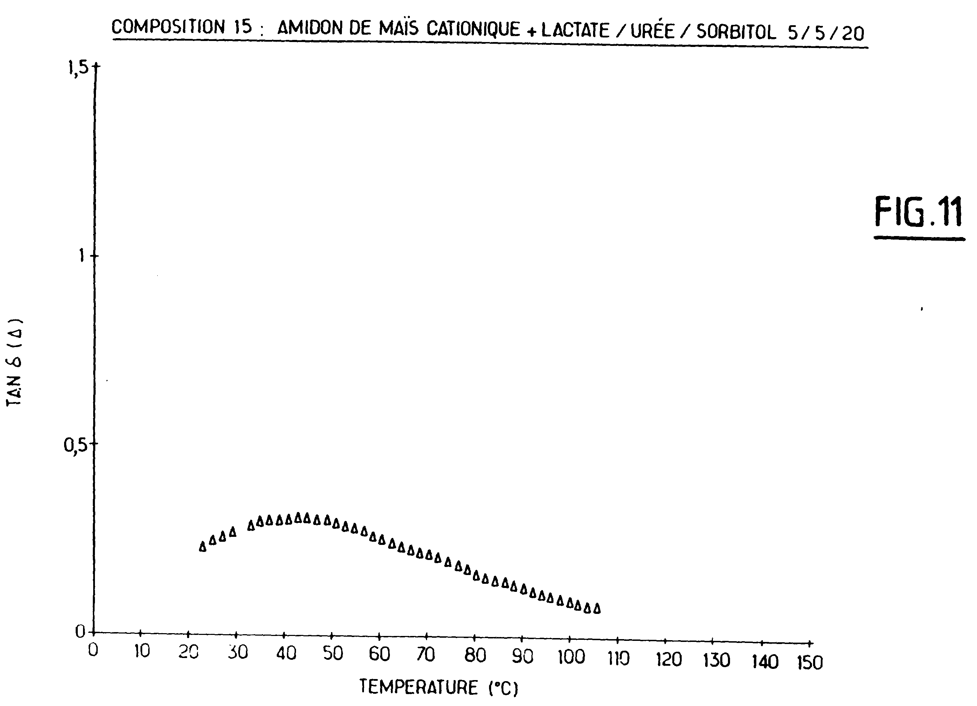

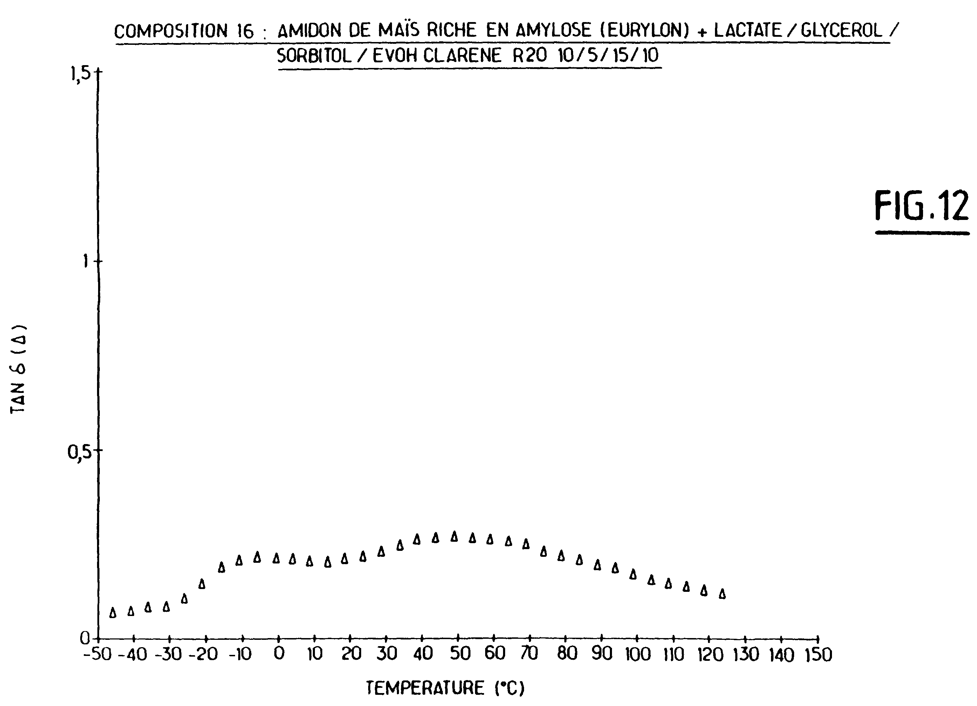

Ce Tableau 2 fait référence aux figures 2 à 12, lesquelles reprennent pour certaines des compositions ainsi testées, l'intrégralité de la courbe montrant l'évolution de la valeur du facteur de perte tgδ en fonction de la température.

| Composition n° | Températures à tgδ maximum | Cf figures |
|---|---|---|
| 1 (témoin) | env. 130°C | fig 2 |
| 2 | env. 95°C | fig 2 |
| 3 | env. 35°C | fig 2 |
| 4 | < 30°C | fig 2 et 3 |
| 5 | env. 53°C | fig 3 et 4 |
| 6 | env. 62°C | fig 4 |
| 7 | env. 60°C | fig 4 |
| 8 | env. 37°C | fig 4 |
| 9 | env. 35°C | fig 5 |

Tableau n° 2 - suite

| Composition n° | Températures à tgδ maximum | Cf figures |
|---|---|---|
| 10 | env. 50°C | fig 6 |
| 11 | env. 48°C | fig 7 |
| 12 | env. 50°C | fig 8 |
| 13 | env. 50°C | fig 9 |
| 14 | env. 40°C | fig 10 |
| 15 | env. 45°C | fig 11 |
| 16 | env. 48°C | fig 12 |

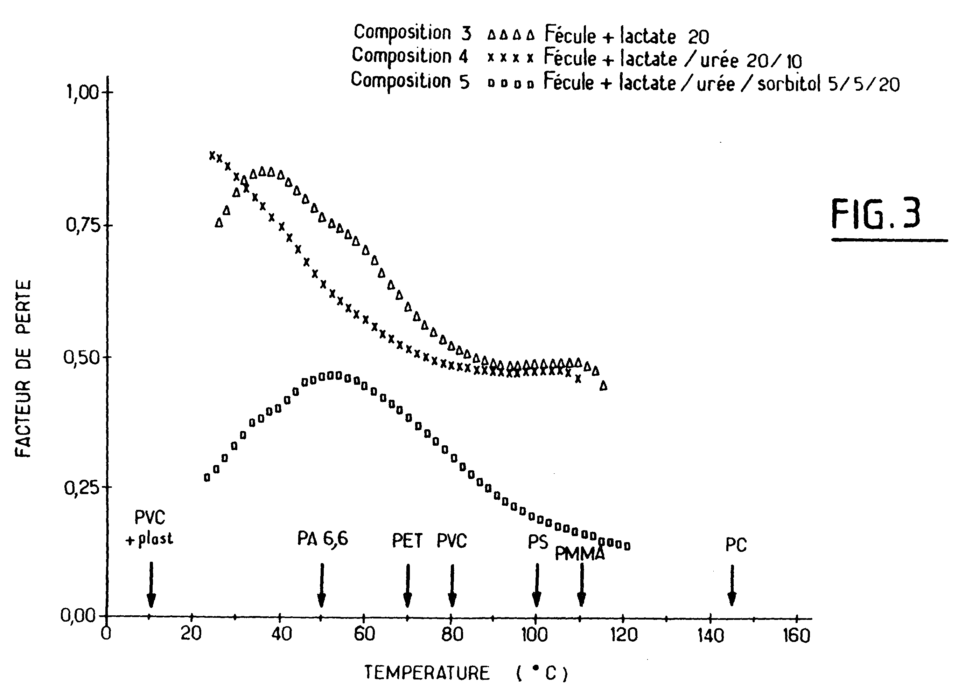

La figure 3 fait, en outre, apparaître le domaine de températures de transition vitreuse de différents polymères de synthèse traditionnels listés ci-dessous, lesquels se répartissent généralement sur la gamme de températures allant de 0 à 150°C environ.

PVC = Polychlorure de vinyle
PVC + plast = PVC + plastifiant
(30 % de diéthylhexylsuccinate)
PA 6,6 = Polyamide 6-6
PET = Polyéthylène téréphtalate
PS = Polystyrène
PMMA = Polyméthacrylate de méthyle
PC = Polycarbonate

Il ressort globalement du tableau 2 et des figures 2 à 12 que les compositions thermoformables selon l'invention, dont les préparation et mise en oeuvre ne posent aucun problème technique particulier, permettent la préparation d'articles thermoformés présentant une large gamme de propriétés mécaniques. La figure 2 en particulier montre que l'association d'un composé amylacé tel que la fécule de pomme de terre avec un sel d'acide hydroxycarboxylique tel que le lactate de sodium, conformément à l'invention, permet de travailler dans des conditions opératoires, en particulier de température significativement moins sévères que celles généralement requises dans le cadre de l'obtention et de la transformation de matières amylacées thermoformables.

Dans le cas présent, on assiste, par adjonction de lactate de sodium (compositions 2 et 3) en lieu et place d'eau (composition témoin 1), à un déplacement de la température du maximum de tgδ du matériau obtenu (130°C environ) vers des températures significativement plus basses, par exemple de 95°C ou 35°C environ respectivement pour les compositions 2 et 3. Il en résulte, par exemple, qu'en fonction du taux d'introduction du sel d'acide hydroxycarboxylique au sein des compositions thermoformables conformes à l'invention, il est possible de fabriquer des matériaux présentant une flexibilité plus ou moins importante à température ambiante.

En outre, la mise en oeuvre éventuelle d'adjuvants tels que l'urée et/ou le sorbitol permet un ajustement supplémentaire des propriétés viscoélastiques et de la valeur de cette température du facteur de perte maximal comme il résulte des courbes reprises au niveau de la figure 3.

On constate, par exemple, que la mise en oeuvre d'urée (composition 4) autorise l'obtention d'une température du maximum de tg$\delta$ encore abaissée (t < 30°C au lieu de 35°C environ pour la composition 3 ne contenant pas d'urée).

D'un autre côté, la Société Demanderesse a observé que la mise en oeuvre de sorbitol apportait une amélioration de la résistance thermique et mécanique du produit fini.

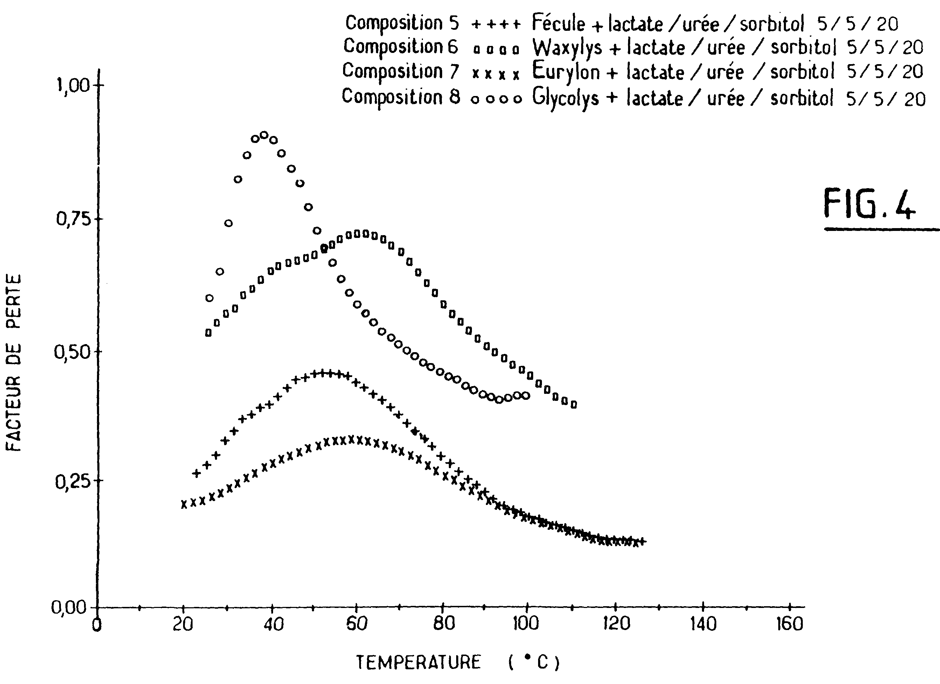

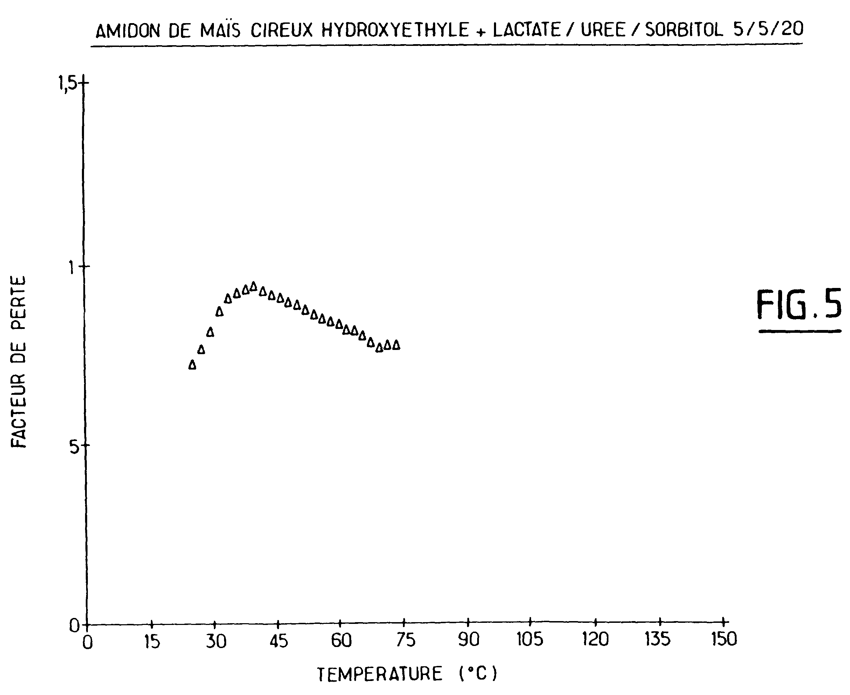

Les courbes des figures 4 et 5 illustrent la possibilité de mettre en oeuvre au sein des compositions thermoformables selon l'invention, notamment celles devant être traitées à des températures inférieures à 120°C environ, y compris inférieures à 100°C, des composés amylacés d'une très grande diversité, que ce soit dans leur origine (fécule de pomme de terre, amidon riche en amylose, amidon cireux, par exemple) ou dans leur mode 4e modification éventuelle par voie chimique (éthérification et/ou réticulation par exemple) et/ou physique.

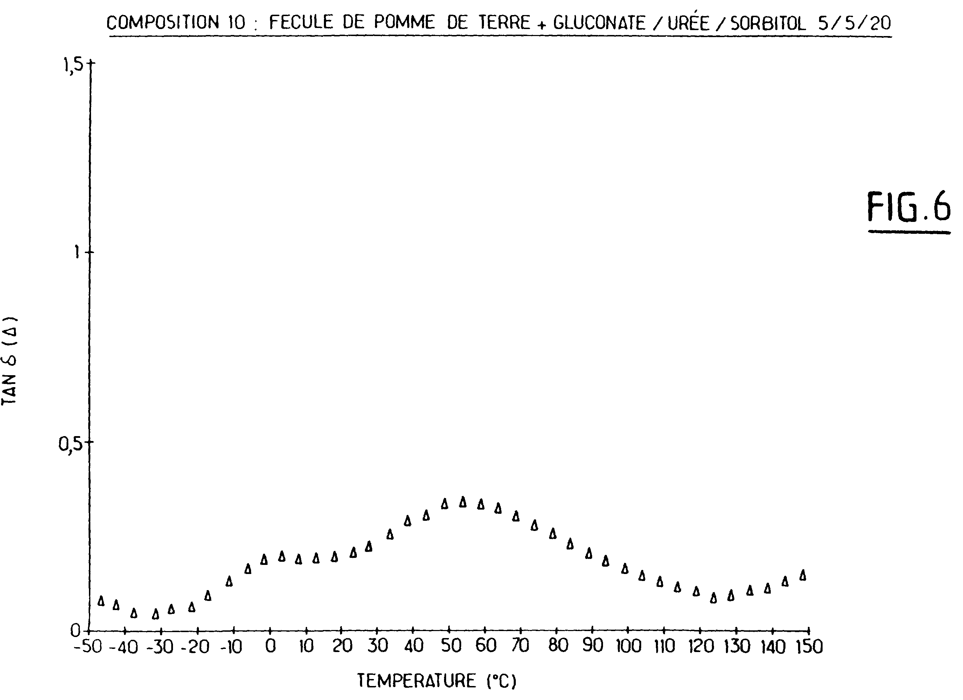

Enfin, les compositions n° 10 à 13 correspondant aux figures 6 à 9 illustrent la possibilité d'utiliser divers sels d'acides hydroxycarboxyliques, conduisant tous à une diminution significative de la température.

## Revendications

1. Composition thermoformable caractérisée par le fait qu'elle contient au moins un composé amylacé et au moins un sel d'acide hydroxycarboxylique.

2. Composition selon la revendication 1, caractérisée par le fait que le composé amylacé se présente dans un état fondu partiel.

3. Composition selon l'une des revendications 1 et 2, caractérisée par le fait qu'elle est apte à fournir un article thermoformé présentant un facteur de perte tg$\delta$ dont la valeur maximum se situe à une température au plus égale à 150°C, notamment entre 0 et 130°C environ.

4. Composition selon l'une des revendications 1 à 3, caractérisée en ce que le composé amylacé est choisi dans le groupe comprenant les amidons natifs, naturels ou hybrides, provenant du maïs, du maïs à haute teneur en amylose, du maïs cireux, du blé, du riz, du pois, de la pomme de terre, du manioc, les coupes ou fractions qui peuvent être faites ou obtenues à partir desdits amidons et les mélanges quelconques d'au moins deux quelconques de ces produits.

5. Composition selon l'une des revendications 1 à 3, caractérisée en ce que le composé amylacé est choisi dans le groupe comprenant les amidons, naturels ou hybrides, modifiés par voie chimique, en particulier par éthérification, ionique ou non ionique, estérification, réticulation, oxydation, traitement alcalin, hydrolyse acide et/ou enzymatique.

6. Composition selon l'une des revendications 1 à 5, caractérisée en ce que le composé amylacé est constitué par un amidon à haute teneur en amylose, natif ou modifié, et en particulier un tel amidon cationisé.

7. Composition selon l'une des revendications 1 à 6, caractérisée en ce que le sel d'acide hydroxycarboxylique est choisi dans le groupe comprenant les sels, en particulier de métaux alcalins ou alcalino-terreux, notamment les sels de sodium ou potassium, d'acides monohydroxy/monocarboxyliques et d'acides polyhydroxy/monocarboxylique et les mélanges quelconques d'au moins deux quelconques desdits sels.

8. Composition selon la revendication 7, caractérisée en ce que le sel d'acide hydroxycarboxylique est un sel de métal alcalin ou alcalino-terreux de l'acide lactique, de l'acide gluconique, de l'acide maltobionique, de l'acide lactobionique ou de l'acide glycérique, ou encore un hydrolysat d'amidon oxydé tel qu'un sirop de glucose oxydé (SGO).

9. Composition selon la revendication 8, caractérisée en ce que le sel d'acide hydroxycarboxylique est un sel de métal alcalin ou alcalino-terreux de l'acide lactique, en particulier du lactate de sodium ou du lactate de potassium.

10. Composition selon l'une des revendications 1 à 9, caractérisée en ce qu'elle présente un rapport pondéral entre composé(s) amylacé(s) d'une part et sel(s) d'acide hydrocarboxylique d'autre part compris entre environ 99/1 et 25/75, de préférence entre 98/2 et 60/40, ledit rapport tenant compte du poids sec de sel(s) d'acide hydroxycarboxyiique mis en oeuvre.

11. Composition selon l'une des revendications 1 à 9 caractérisée en ce qu'elle contient, en outre, au moins un adjuvant, ledit adjuvant étant choisi, en particulier, dans le groupe comprenant les agents d'extension ou de charge, les résines synthétiques, les plastifiants, les agents hydrofugeants, les agents lubrifiants, les agents colorants, les agents anti-flamme, les agents anti-oxydants et les fongicides.

12. Composition selon la revendication 11, caractérisée en ce qu'elle contient au moins un adjuvant choisi dans le groupe comprenant l'urée et ses dérivés, les sucres hydrogénés, et notamment le sorbitol, le mannitol, le maltitol, le lactitol ainsi que les produits pouvant contenir au moins l'un desdits sucres hydrogénés, notamment les hydrolysats d'amidon hydrogénés, le glycérol et ses dérivés, et les résines de synthèse.

13. Composition selon la revendication 12, caractérisée en ce que l'adjuvant est choisi dans le groupe comprenant l'urée, le sorbitol, le glycérol, leurs dérivés ainsi que les mélanges quelconques de ces produits.

14. Procédé de préparation d'une composition thermoformable selon l'une des revendications 1 à 13 caractérisé par le fait que l'on soumet un composé amylacé, en présence ou non d'un sel d'acide hydroxycarboxyiique et/ou d'un ou de plusieurs adjuvants de toutes natures, à un traitement apte à l'amener dans un état partiellement fondu, de préférence dans des conditions telles que le composé amylacé ne subisse pas de dépolymérisation substantielle et que, éventuellement, l'on met ultérieurement le composé amylacé partiellement fondu ainsi obtenu en présence d'au moins un sel d'acide hydrocarboxylique et/ou d'un ou de plusieurs adjuvants de toutes natures.

15. Procédé selon la revendication 14, caractérisé par le fait que le traitement auquel on soumet le composé amylacé est un traitement thermique, combinant ou non l'action d'ultra-sons et/ou de la pression à celle de la température, en particulier un traitement de cuisson-extrusion ou de gélatinisation sur tambour, ou bien un traitement aux micro-ondes.

16. Procédé selon la revendication 15, caractérisé par le fait que le traitement thermique, en particulier de cuisson-extrusion, auquel on soumet le composé amylacé est effectué à une température au plus égale à 130°C environ, notamment se situant entre environ 50°C et environ 120°C.

17. Procédé selon la revendication 16, caractérisé par le fait que le traitement thermique auquel on soumet le composé amylacé est un traitement de cuisson-extrusion effectué à une température se situant entre environ 80°C et environ 100°C.

18. Procédé selon l'une des revendications 14 à 17, caractérisé en ce que le traitement auquel on soumet le composé amylacé en vue de l'amener dans un état partiellement fondu est effectué en absence de sel d'acide hydroxycarboxylique et que le composé amylacé partiellement fondu obtenu est ultérieurement mis en présence, par tout moyen approprié, d'au moins un sel d'acide hydroxycarboxylique, ledit sel pouvant le cas échéant être généré in situ au sein de la composition résultante.

19. Procédé selon l'une des revendications 14 à 17, caractérisé en ce que le traitement auquel on soumet le composé amylacé en vue de l'amener dans un état partiellement fondu est effectué en présence d'au moins un sel d'acide hydroxycarboxylique, ledit sel pouvant le cas échéant être généré in situ au sein de la composition résultante.

20. Utilisation d'une composition thermoformable selon l'une des revendications 1 à 13 ou préparée selon l'une des revendications 14 à 19 pour l'obtention d'articles thermoformés.

21. Utilisation selon la revendication 20, pour l'obtention d'articles thermoformés à base de résine(s) synthétique(s).

22. Utilisation d'une composition thermoformable selon l'une des revendications 1 à 13 ou préparée selon l'une des revendications 17 à 19 pour l'obtention, notamment par extrusion, coextrusion, moulage par injection, moulage par soufflage ou par calandrage, d'articles thermoformés présentant un facteur de perte tgδ dont la valeur maximum se situe à une température au plus égale à 130°C environ.

# EP 0 497 706 B1

**Patentansprüche**

1. Thermoformbare Zusammensetzung, dadurch gekennzeichnet, daß sie mindestens eine Stärke-Verbindung und mindestens ein Hydroxycarbonsäuresalz enthält.

2. Zusammensetzung nach Anspruch 1, dadurch gekennzeichnet, daß die Stärke-Verbindung in einem teilweise geschmolzenen Zustand vorliegt.

3. Zusammensetzung nach einem der Ansprüche 1 und 2, dadurch gekennzeichnet, daß sie geeignet ist zur Herstellung eines thermogeformten Gegenstandes (Formkörpers), der einen Verlustfaktor tg $\delta$ aufweist, dessen Maximalwert bei einer Temperatur von höchstens 150°C, insbesondere zwischen 0 und etwa 130°C liegt.

4. Zusammensetzung nach einem der Ansprüche 1 bis 3, dadurch gekennzeichnet, daß die Stärke-Verbindung ausgewählt wird aus der Gruppe, die umfaßt native, natürliche oder Hybrid-Stärken, die aus Mais, Mais mit hohem Amylosegehalt, wachsartigem Mais, Getreide, Reis, Erbsen, Kartoffeln oder Maniok stammen, Auszügen oder Fraktionen, die aus den genannten Stärken hergestellt oder erhalten werden können, und beliebige Mischungen aus mindestens zwei dieser Produkte.

5. Zusammensetzung nach einem der Ansprüche 1 bis 3, dadurch gekennzeichnet, daß die Stärke-Verbindung ausgewählt wird aus der Gruppe, die umfaßt natürliche oder Hybrid-Stärken, die auf chemischem Wege, insbesondere durch ionische oder nicht-ionische Veretherung, Veresterung, Vernetzung, Oxidation, alkalische Behandlung, saure und/oder enzymatische Hydrolyse modifiziert worden sind.

6. Zusammensetzung nach einem der Ansprüche 1 bis 5, dadurch gekennzeichnet, daß die Stärke-Verbindung besteht aus einer nativen oder modifizierten Stärke mit hohem Amylosgehalt und insbesondere aus einer solchen kationisierten Stärke.

7. Zusammensetzung nach einem der Ansprüche 1 bis 6, dadurch gekennzeichnet, daß das Hydroxycarbonsäuresalz ausgewählt wird aus der Gruppe, die umfaßt die Salze insbesondere von Alkalimetallen oder Erdalkalimetallen, insbesondere die Natrium- oder Kaliumsalze von Monohydroxymonocarbonsäuren und Polyhydroxymonocarbonsäuren und beliebige Mischungen von mindestens zwei der genannten Salze.

8. Zusammensetzung nach Anspruch 7, dadurch gekennzeichnet, daß es sich bei dem Hydroxycarbonsäuresalz um ein Alkalimetall- oder Erdalkalimetallsalz der Milchsäure, der Gluconsäure, der Maltobionsäure, der Lactobionsäure oder der Glycerinsäure oder auch um ein oxidiertes Stärkehydrolysat wie einen oxidierten Glucosesirup (SGO) handelt.

9. Zusammensetzung nach Anspruch 8, dadurch gekennzeichnet, daß es sich bei dem Hydroxycarbonsäuresalz um ein Alkalimetall- oder Erdalkalimetallsalz der Milchsäure, insbesondere um Natriumlactet oder Kaliumlactat handelt.

10. Zusammensetzung nach einem der Ansprüche 1 bis 9, dadurch gekennzeichnet, daß sie ein Gewichtsverhältnis zwischen der(den) Stärke-Verbindung(en) einerseits und dem(den) Hydroxycarbonsäuresalz(en) andererseits zwischen etwa 99/1 und 25/75, vorzugsweise zwischen 98/2 und 60/40 aufweist, wobei das genannte Verhältnis auf das Trockengewicht des(der) eingesetzten Hydroxycarbonsäuresalze(s) bezogen ist.

11. Zusammensetzung nach einem der Ansprüche 1 bis 9, dadurch gekennzeichnet, daß sie außerdem mindestens ein Adjuvans enthält, wobei das genannte Adjuvans ausgewählt wird insbesondere aus der Gruppe, die umfaßt Streckmittel oder Füllmittel, Kunstharze, Weichmacher, wasserabweisend machende Mittel, Gleit- bzw. Schmiermittel, Färbemittel, flammwidrig machende Mittel, Antioxidationsmittel und Fungizide.

12. Zusammensetzung nach Anspruch 11, dadurch gekennzeichnet, daß sie mindestens ein Adjuvans enthält, das ausgewählt wird aus der Gruppe, die umfaßt Harnstoff und seine Derivate, hydrierte Zucker und insbesondere Sorbit, Mannit, Maltit, Lactit sowie Produkte, die mindestens einen der genannten hydrierten Zucker enthalten können, insbesondere die Hydrolysate von hydrierter Stärke, Glycerin und ihre Derivate und Kunstharze.

13. Zusammensetzung nach Anspruch 12, dadurch gekennzeichnet, daß das Adjuvans ausgewählt wird aus der Gruppe, die umfaßt Harnstoff, Sorbit, Glycerin, ihre Derivate sowie beliebige Mischungen dieser Produkte.

14

**14.** Verfahren zur Herstellung einer thermoformbaren Zusammensetzung nach einem der Ansprüche 1 bis 13, dadurch gekennzeichnet, daß man eine Stärke-Verbindung in Gegenwart oder Abwesenheit eines Hydroxycarbonsäuresalzes und/oder eines oder mehrerer Adjuvantien beliebiger Art einer Behandlung unterwirft, um sie in einen teilweise geschmolzenen Zustand zu überführen, vorzugsweise unter solchen Bedingungen, daß die Stärke-Verbindung keine wesentliche Depolymerisation erleidet, und daß man gegebenenfalls die auf diese Weise erhaltene, teilweise geschmolzene Stärke-Verbindung schließlich mit mindestens einem Hydroxycarbonsäuresalz und/oder mindestens einem der verschiedenen Adjuvantien beliebiger Art kombiniert.

**15.** Verfahren nach Anspruch 14, dadurch gekennzeichnet, daß die Behandlung, der man die Stärke-Verbindung unterwirft, eine thermische Behandlung, kombiniert oder nicht-kombiniert mit der Einwirkung von Ultraschall und/oder von Druck, insbesondere eine Koch-Extrusions- oder Gelatinierungsbehandlung auf einer Trommel oder eine Mikrowellen-Behandlung ist.

**16.** Verfahren nach Anspruch 15, dadurch gekennzeichnet, daß die thermische Behandlung, insbesondere die Koch-Extrusion, der die Stärke-Verbindung unterworfen wird, bei einer Temperatur von höchstens etwa 130°C, insbesondere zwischen etwa 50 und etwa 120°C, durchgeführt wird.

**17.** Verfahren nach Anspruch 16, dadurch gekennzeichnet, daß die thermische Behandlung, der die Stärke-Verbindung unterworfen wird, eine Koch-Extrusions-Behandlung ist, die bei einer Temperatur zwischen etwa 80 und etwa 100°C durchgeführt wird.

**18.** Verfahren nach einem der Ansprüche 14 bis 17, dadurch gekennzeichnet, daß die Behandlung, der die Stärke-Verbindung unterworfen wird, um sie in einen teilweise geschmolzenen Zustand zu überführen, in Abwesenheit eines Hydroxycarbonsäuresalzes durchgeführt wird und daß die dabei erhaltene, teilweise geschmolzene Stärke-Verbindung schließlich auf irgendeine geeignete Weise mit mindestens einem Hydroxycarbonsäuresalz kombiniert wird, wobei das genannte Salz gegebenenfalls in situ im Innern der resultierenden Zusammensetzung gebildet werden kann.

**19.** Verfahren nach einem der Ansprüche 14 bis 17, dadurch gekennzeichnet, daß die Behandlung, der die Stärke-Verbindung unterworfen wird, um sie in einen teilweise geschmolzenen Zustand zu überführen, in Gegenwart mindestens eines Hydroxycarbonsäuresalzes durchgeführt wird, wobei das genannte Salz gegebenenfalls in situ im Innern der resultierenden Zusammensetzung gebildet werden kann.

**20.** Verwendung einer thermoformbaren Zusammensetzung nach einem der Ansprüche 1 bis 13 oder einer solchen, die nach einem der Ansprüche 14 bis 19 hergestellt worden ist, zur Herstellung von thermogeformten Gegenständen (Formkörpern).

**21.** Verwendung nach Anspruch 20 zur Herstellung von thermogeformten Gegenständen (Formkörpern) auf Basis eines oder mehrerer Kunstharze.

**22.** Verwendung einer thermoformbaren Zusammensetzung nach einem der Ansprüche 1 bis 13 oder einer solchen, die nach einem der Ansprüche 17 bis 19 hergestellt worden ist, zur Herstellung, insbesondere durch Extrusion, Coextrusion, Spritzgießen, Blasformen oder Kalandrieren, von thermogeformten Gegenständen (Formkörpern), die einen Verlustfaktor tg $\delta$ aufweisen, dessen Maximalwert bei einer Temperatur von höchstens etwa 130°C liegt.

## Claims

**1.** Thermoformable compound characterized in that it contains at least one amylaceous component and at least one hydroxycarboxylic acid salt.

**2.** Compound according to claim 1, characterized in that the amylaceous component exists in a partially melted state.

**3.** Compound according to one of the claims 1 and 2, characterized in that it is capable of providing a thermoformed article with a tangent of the loss angle tg$\delta$ whose maximum value is found at a temperature not exceeding 150°C, and in particular between approximately 0 and 130°C.

**4.** Compound according to one of the claims 1 to 3, characterized in that the amylaceous component is chosen from the group consisting of the natural or hybrid native starches from corn, high-amylose corn, waxy corn, wheat, rice, peas, potato, manioc, the cuts or fractions which may be made or obtained from said starches and any mixtures of at least two of any of these products.

5. Compound according to one of the claims 1 to 3 characterized in that the amylaceous component is chosen from the group consisting of the natural or hybrid starches modified chemically, in particular by ionic or nonionic etherification, esterification, cross-linking, oxidation, alkaline treatment, acid and/or enzymatic hydrolysis.

6. Compound according to one of the claims 1 to 5, characterized in that the amylaceous component is composed of a native or modified, high-amylose starch, and in particular such a cationized starch.

7. Compound according to one of the claims 1 to 6, characterized in that the hydroxycarboxylic acid salt is chosen from the group consisting of the salts, particularly of an alkali metal or alkaline earth metal, notably the salts of sodium or potassium, of monohydroxy/monocarboxylic acids and of polyhydroxy/monocarboxylic acids and any mixtures of at least two of said salts.

8. Compound according to claim 7, characterized in that the hydroxycarboxylic acid salt is an alkali metal or alkaline earth metal salt of lactic acid, gluconic acid, maltobionic acid, lactobionic acid or glyceric acid, or yet an oxidized starch hydrolysate such as an oxidized glucose syrup (OGS).

9. Compound according to claim 8, characterized in that the hydroxycarboxylic acid salt is an alkali metal or alkaline earth metal salt of lactic acid, in particular sodium lactate or potassium lactate.

10. Compound according to one of the claims 1 to 9, characterized in that it presents a weight ratio between the amylaceous component(s) on the one hand, and the hydroxycarboxylic acid salt(s) on the other hand, of between approximately 99/1 and 25/75, preferably between 98/2 and 60/40, said ratio taking into account the dry weight of the hydroxycarboxylic acid salt(s) used.

11. Compound according to one of the claims 1 to 9, characterized in that it furthermore contains at least one additive, said additive being chosen, in particular, from the group consisting of extension or charge agents, synthetic resins, plasticizers, water-repellant agents, lubricants, dyes, fire-repellants, antioxidants and fungicides.

12. Compound according to claim 11, characterized in that it contains at least one additive chosen in the group consisting of urea and its derivatives, the hydrogenated sugars, and notably sorbitol, mannitol, maltitol, lactitol as well as products which may contain at least one of said hydrogenated sugars, notably the hydrogenated starch hydrolysates, glycerol and its derivatives, and synthetic resins.

13. Compound according to claim 12, characterized in that the additive is chosen from the group consisting of urea, sorbitol, glycerol, their derivatives as well as any mixtures of these products.

14. Process for the preparation of a thermoformable compound according to one of the claims 1 to 13, characterized by the fact that an amylaceous component is subjected, in the presence or not of a hydroxycarboxylic acid salt and/or one or several additives of any type, to a treatment capable of putting it into a partially melted state, preferably in conditions such that the amylaceous component does not undergo substantial depolymerization and that, possibly, the partially melted amylaceous component thus obtained is subsequently placed in the presence of at least one hydroxycarboxylic acid salt and/or one or several additives of any type.

15. Process according to claim 14, characterized by the fact that the treatment to which the amylaceous component is subjected is a thermal treatment, combining or not the action of ultrasound and/or pressure with that of temperature, in particular a treatment of extrusion cooking or drum gelatinization, or yet a microwave treatment.

16. Process according to claim 15, characterized by the fact that the thermal treatment, in particular of extrusion cooking, to which the amylaceous component is subjected, is carried out at a temperature not exceeding approximately 130°C, and in particular between approximately 50°C and approximately 120°C.

17. Process according to claim 16, characterized by the fact that the thermal treatment to which the amylaceous component is subjected is a treatment of extrusion cooking carried out at a temperature situated between approximately 80°C and approximately 100°C.

18. Process according to one of the claims 14 to 17, characterized in that the treatment to which the amylaceous component is subjected in view of bringing it to a partially melted state is carried out in the absence of the hydroxycarboxylic acid salt and that the partially melted amylaceous component obtained is subsequently placed in the presence, by any suitable means, of at least one hydroxycarboxylic acid salt, said salt able to be generated *in situ* within the resulting compound if need be.

19. Process according to one of the claims 14 to 17, characterized in that the treatment to which the amylaceous component is subjected in view of bringing it to a partially melted state is carried out in the presence of at least one hydroxycarboxylic acid salt, said salt able to be generated *in situ* within the resulting compound if need be.

20. Utilization of a thermoformable compound according to one of the claims 1 to 13 or prepared according to one of the claims 14 to 19 in order to obtain thermoformed articles.

21. Utilization according to claim 20, in order to obtain synthetic resin(s)-based thermoformed articles.

22. Utilization of a thermoformable compound according to one of the claims 1 to 13 or prepared according to one of the claims 17 to 19 in order to obtain, notably by extrusion, coextrusion, injection moulding, blow or calender moulding, thermoformed articles with a tangent of the loss angle tg$\delta$ whose maximum value is at a temperature at most equal to approximately 130°C.

COMPOSITION TEMOIN N° 1

FIG.1

MODULES DYNAMIQUES ( Pa )

MODULE ELASTIQUE E'

MODULE VISQUEUX E''

FACTEUR DE PERTE

FACTEUR DE PERTE

TEMPERATURE   ( °C )

EP 0 497 706 B1

Composition 1  △ △ △ △  Fécule + eau
Composition 2  ▫ ▫ ▫ ▫  Fécule + 10% lactate de sodium
Composition 3  x x x x  Fécule + 20% lactate de sodium

FIG. 2

EP 0 497 706 B1

FACTEUR DE PERTE

TEMPERATURE   ( °C )

Composition 3  △△△△ Fécule + lactate 20
Composition 4  x x x x Fécule + lactate / urée 20/10
Composition 5  □ □ □ □ Fécule + lactate / urée / sorbitol 5/5/20

FIG.3

EP 0 497 706 B1

Composition 5 + + + + Fécule + lactate / urée / sorbitol 5 / 5 / 20
Composition 6 ▫ ▫ ▫ ▫ Waxylys + lactate / urée / sorbitol 5 / 5 / 20
Composition 7 x x x x Eurylon + lactate / urée / sorbitol 5 / 5 / 20
Composition 8 o o o o Glycolys + lactate / urée / sorbitol 5 / 5 / 20

FIG. 4

FACTEUR DE PERTE

TEMPERATURE ( °C )

EP 0 497 706 B1

AMIDON DE MAÏS CIREUX HYDROXYETHYLE + LACTATE / UREE / SORBITOL 5/5/20

FIG.5

COMPOSITION 10 : FECULE DE POMME DE TERRE + GLUCONATE / URÉE / SORBITOL 5/5/20

FIG.6

TAN δ (Δ)

TEMPERATURE (°C)

EP 0 497 706 B1

COMPOSITION 11 : FECULE DE POMME DE TERRE + SGO / URÉE / SORBITOL 5/5/20

FIG.7

TAN δ (Δ)

TEMPERATURE (°C)

EP 0 497 706 B1

COMPOSITION 12 : FÉCULE DE POMME DE TERRE + TARTRATE / URÉE / SORBITOL 5 / 5 / 20

FIG.8

TAN δ (Δ)

TEMPERATURE (°C)

EP 0 497 706 B1

COMPOSITION 13 : FECULE DE POMME DE TERRE + CITRATE / URÉE / SORBITOL 5/5/20

FIG.9

EP 0 497 706 B1

COMPOSITION 14 : FECULE DE POMME DE TERRE CATIONIQUE + LACTATE / URÉE / SORBITOL 5/5/20

FIG.10

EP 0 497 706 B1

COMPOSITION 15 : AMIDON DE MAÏS CATIONIQUE + LACTATE / URÉE / SORBITOL 5 / 5 / 20

FIG.11

COMPOSITION 16 : AMIDON DE MAÏS RICHE EN AMYLOSE (EURYLON) + LACTATE / GLYCEROL / SORBITOL / EVOH CLARENE R20 10/5/15/10

FIG.12

EP 0 497 706 B1